# FASCICULE DE BREVET EUROPEEN

(11) **EP 1 232 691 B1**
(45) Date de publication et mention de la délivrance du brevet: **06.07.2005**
(21) Numéro de dépôt: 02364010.5
(22) Date de dépôt: 18.02.2002
(51) Int. Cl.: A22B 5/04

(54) **Dispositif et procédé pour prélever et collecter le sang d'un animal**
Vorrichtung zur Abnahme und Gewinning von Tierblut
Device for drawing and collecting animal blood

(30) Priorité: 20.02.2001 FR 0102365
(43) Date de publication de la demande: 21.08.2002
(73) Titulaire: Bernard S.A., 56500 Moreac (FR); Delaunoy, Jean-Pierre, 59690 Vieux Conde (FR)
(72) Inventeur: Delaunoy, Jean-Pierre, 7532 Tournai (BE)
(74) Mandataire: Maillet, Alain

(56) Documents cités:
- CH-A- 288 711
- FR-A- 1 327 640
- US-A- 3 560 028
- US-A- 4 004 322
- US-A- 4 326 025
- US-A- 5 514 106
- DATABASE WPI Week 199703 Derwent Publications Ltd., London, GB; AN 1997-021798 XP002180285 & BR 9 405 317 A (DIMENSTEIN), 3 décembre 1996 (1996-12-03)

## Description

L'invention concerne un dispositif et un procédé pour prélever et collecter le sang d'animaux de boucherie, notamment de porcs. Elle trouve application notamment dans les installations d'abattage devant obéir à des conditions hygiéniques strictes. Voir p.e. le document BR-A-9405317.

Dans les abattoirs industriels modernes, les préoccupations de contrôle sanitaire et de maîtrise des coûts de production ont conduit à rationaliser la chaîne d'abattage et notamment l'étape de saignée des animaux, indispensable à l'obtention d'une viande de qualité. Par ailleurs, le sang animal est un sous-produit présentant des débouchés importants dans l'industrie alimentaire humaine et animale. Il importe donc de pouvoir le prélever et le collecter dans les meilleures conditions hygiéniques possibles.

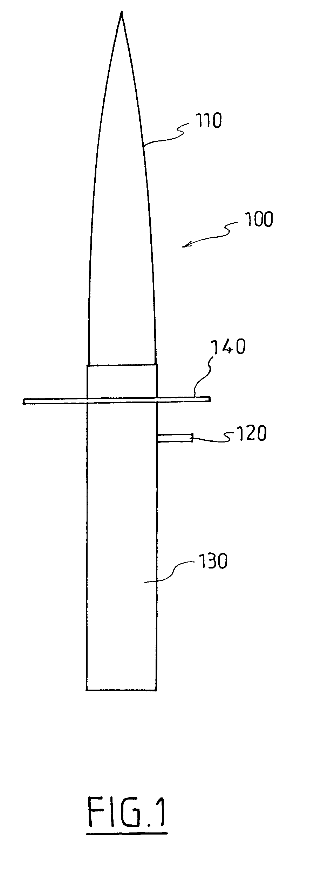

Selon une technique d'abattage connue, les porcs sont d'abord anesthésiés au CO₂ ou par électro-narcose puis suspendus par leurs pattes arrières à un carrousel de saignée. Un couteau à manche creux ou trocart est enfoncé dans crosse aortique de l'animal. Ce trocart est relié à un conteneur au moyen d'un tuyau souple, un conteneur étant généralement relié à plusieurs trocarts. Un exemple de trocart couramment utilisé pour saigner les animaux de boucherie est schématiquement représenté en Fig. 1. Ce dispositif 100 comporte une lame à double tranchant 110 soudée à un manche creux 130. La base du manche creux est susceptible d'être reliée par un tuyau souple (non représenté) à un conteneur. Le manche est pourvu à sa partie supérieure d'une tubulure 120 d'arrivée de produit anti-coagulant qui empêche le sang de coaguler à l'intérieur du manche et du tuyau souple.

Le sang prélevé au moyen du trocart est récupéré par écoulement gravitaire dans un conteneur. Afin d'accélérer la saignée, le conteneur est maintenu en dépression au moyen d'une pompe aspirante. Le conteneur est prévu pour avoir une capacité suffisante pour pouvoir récupérer successivement ou simultanément le sang d'une dizaine d'animaux. Après un certain délai, les conteneurs sont vidangés dans une cuve de stockage.

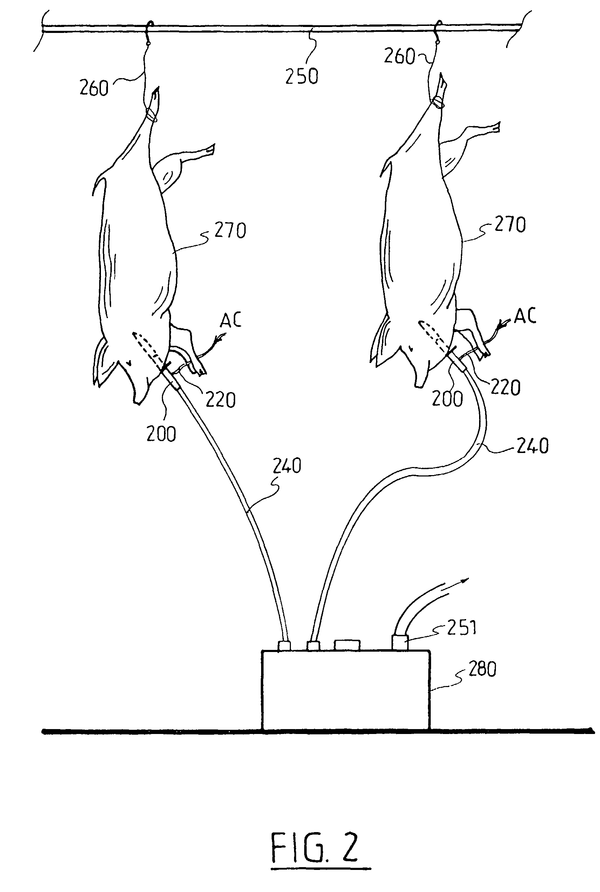

Un poste de saignée utilisant ce procédé connu est illustré en Fig. 2. Le poste comprend un convoyeur 250 auquel sont suspendus les animaux grâce à des élingues 260. Les trocarts 200 sont représentés enfoncés dans les corps 270 d'animaux abattus. Ces trocarts sont reliés à un conteneur 280 par des tuyaux souples 240. Les tubulures d'arrivée 220 sont reliées à un réservoir de produit anti-coagulant (non représenté). Le conteneur 280 est relié au moyen d'une prise 251 à une pompe aspirante (non représentée).

Après la saignée, les animaux sont lavés, échaudés et épilés puis dépecés et éviscérés. Les carcasses et les viscères sont contrôlées par un poste de contrôle vétérinaire. Lorsque le contrôle vétérinaire conclut à un animal malade ou impropre à la consommation , la carcasse est saisie. Le poste de contrôle vétérinaire en avertit le poste de saignée de manière à ce que le sang de l'animal malade soit également saisi. En pratique le sang collecté reste stocké dans les conteneurs pendant le temps de transit dans la chaîne d'abattage, de manière à ce que le conteneur ayant collecté le sang de l'animal malade soit encore disponible au moment où l'ordre de saisie arrive. Son contenu ne peut alors être vidangé dans la cuve de stockage et doit être détruit. Ainsi, le sang des animaux sains dont le sang a été collecté dans le conteneur ayant recueilli le sang de l'animal saisi est perdu. Qui plus est, si plusieurs conteneurs ont servi à collecter le sang de l'animal saisi, c'est l'ensemble du sang collecté dans ces conteneurs qui doit être détruit. Or, la destruction du sang est onéreuse car elle doit être accompagnée de mesures anti-pollution drastiques. Enfin, si la carcasse d'un animal malade ne passe pas au contrôle vétérinaire pour une raison quelconque, par exemple parce qu'elle s'est détachée de son élingue à une certaine étape de traitement de la chaîne, le sang de l'animal malade sera transféré avec celui des animaux sains dans la cuve de stockage. Ce n'est que lorsque la perte de l'animal sera découverte que des mesures pourront être prises, ce qui peut intervenir bien après que le sang de l'animal malade ait été transféré dans la cuve de stockage. On doit alors faire face à une situation délicate : soit l'on accepte le défaut hygiénique de milliers de litres de sang contenu dans la cuve, soit on supporte le coût de leur destruction.

En outre, les conteneurs de collecte de sang sont, comme on l'a vu, placés en dépression au moyen d'une pompe aspirante, pour accélérer la saignée. L'inconvénient de ce système est de rejeter dans l'atmosphère les germes contenus dans le sang des animaux avec les risques importants de contamination qui en découlent. Il est également très difficile de nettoyer complètement les conteneurs ainsi que la tuyauterie qui a servi au prélèvement. Les restes de sang sont un milieu de culture favorables à la prolifération d'une grande variété de germes, ce qui aggrave encore les risques de contamination.

Par ailleurs, on connait par le document US-A-3 560 028. un dispositif permettant de raccorder de manière étanche deux éléments tubulaires entre eux Le dispositif est constitué d'un premier élément tubulaire (1) pourvu vers son extrémité libre d'un renflement (3) et d'un second élément tubulaire (5) dont l'extrémité libre qui est évasée est enfilée sur l'extrémité du premier élément (1). Un joint (4) d'etanchéité peut être monté derrière le renflement (3). Une bague (6) pourvue d'une paroi intérieure conique est montée coulissante sur le premier tube (1) en étant positionnée de manière à ce que l'ouverture de plus grand diamètre soit tournée vers le second tube (5). La bague (6) est repoussée en direction du second tube (5) pour que l'extrémité de celui-ci (5) soit mise en contact avec la paroi intérieure conique. Ainsi la pression exercée dans les tubes a pour effet que l'extremité libre du second tube (5) entraîne par contact la bague (6) en direction de celui-ci de sorte que la bague (6) presse avec une force accrue ladite extrémité.

Le problème à la base de l'invention est de proposer un dispositif amélioré et une méthode pour prélever et collecter le sang d'animaux de boucherie, notamment de porcs qui ne présentent pas les inconvénients précités.

Le dispositif et la méthode selon la présente invention permettent en particulier un prélèvement et une collecte individuelle du sang dans de bonnes conditions d'hygiène ainsi qu'une destruction minimale de sang en cas de saisie.

L'invention est définie par un dispositif selon la revendication 1 pour prélever le sang d'un animal de boucherie, notamment d'un porc, comprenant un manche tubulaire à une première extrémité duquel est fixée une lame ainsi qu'un moyen de fixation rapide adapté à fixer audit manche une poche destinée à recueillir le sang de l'animal.

Ledit moyen de fixation comporte un moyen de blocage ainsi qu'une bague pouvant librement coulisser sur ce dernier, adaptée à coopérer avec ledit moyen de blocage de manière à former une liaison substantiellement étanche.

La bague présente une paroi intérieure de forme tronconique et que le moyen de blocage est formé par une virole de forme cylindrique, la paroi intérieure pouvant venir s'appuyer sur l'arête supérieure de ladite virole. La virole peut faire partie intégrale du manche.

Le dispositif comprend avantageusement une poche constituée d'un sac de collecte de sang, en matière plastique, de capacité suffisante pour recueillir la quantité de sang d'un animal, ledit sac présentant à sa partie supérieure un orifice de taille suffisante pour laisser passer la seconde extrémité du manche et pouvant être fixé à ce dernier au moyen dudit moyen de fixation.

Le bord supérieur du sac peut être coincé entre la paroi intérieure de la bague et ladite virole. Avantageusement, ledit sac comprend des moyens d'identification et le matériau constitutif de la paroi intérieure du sac contient ou est revêtue d'un agent complexant du calcium.

Selon une première variante manche tubulaire est doté d'une garde formée de deux bases articulées sur lesquelles sont fixées deux griffes, la garde pouvant prendre une première position dans laquelle les griffes sont rapprochées et une seconde position dans laquelle les griffes sont écartées du manche. Selon une seconde variante la garde est fixe et le manche tubulaire est pourvu à sa partie supérieure de dents dirigés vers le bas.

Le manche ainsi que la lame sont avantageusement réalisés en acier inox électro-poli.

La lame peut être fixée audit manche au moyen d'un étrier dont les bras sont fixés à la partie supérieure du manche. Avantageusement, la lame ne comporte qu'un seul tranchant.

L'invention concerne également un procédé de prélèvement du sang d'un animal de boucherie, notamment d'un porc, dans lequel on utilise le dispositif de prélèvement exposé ci-dessus, l'animal étant couché sur un tapis d'entraînement pendant la saignée.

Avantageusement, une poche de collecte de sang est fixée au manche du dispositif de prélèvement par ledit moyen de fixation et ladite poche est également placée sur ledit tapis d'entraînement ou sur un élément d'entraînement progressant substantiellement à la même vitesse que ledit tapis.

L'invention concerne encore un procédé de prélèvement utilisant le dispositif de prélèvement exposé ci-dessus selon lequel on fixe préalablement une poche de collecte de sang au manche dudit dispositif par ledit moyen de fixation et on injecte via l'orifice supérieur du manche un agent anti-coagulant à l'intérieur de ladite poche.

Les caractéristiques de l'invention mentionnées ci-dessus, ainsi que d'autres, apparaîtront plus clairement à la lecture de la description faite en relation avec les dessins joints, parmi lesquels :
La Fig 1 représente schématique un trocart utilisé pour le prélèvement du sang d'animaux de boucherie, tel que connu de l'état de la technique ;
La Fig. 2 représente schématiquement un poste de saignée dans une chaîne d'abattage, tel que connu de l'état de la technique;
La Fig 3a représente schématiquement une demi-coupe du dispositif de prélèvement de sang selon un mode de réalisation de l'invention dans une première configuration;
La Fig. 3b représente schématiquement une demi-coupe du dispositif de prélèvement de sang selon un mode de réalisation de l'invention dans une seconde configuration;
La Fig. 3c représente schématiquement une demi-coupe du dispositif de prélèvement de sang selon un mode de réalisation de l'invention dans une troisième configuration;
La Fig 3d représente schématiquement une vue de dessus du dispositif de prélèvement de sang selon un mode de réalisation selon l'invention ;
La Fig. 4 représente schématiquement un poste de saignée utilisant le dispositif de prélèvement et de collecte de sang selon un mode de réalisation de l'invention.

L'idée générale à la base de l'invention est de prévoir un moyen de fixation rapide permettant de fixer une poche de collecte de sang à un trocart. De cette manière, le sang est récupéré individuellement, animal par animal, ce qui permet, en cas de saisie de la carcasse, de limiter la quantité de sang à détruire au strict nécessaire. Enfin outre, l'ensemble trocart-poche de collecte de sang forme un circuit fermé qui réduit considérablement les risques de contamination.

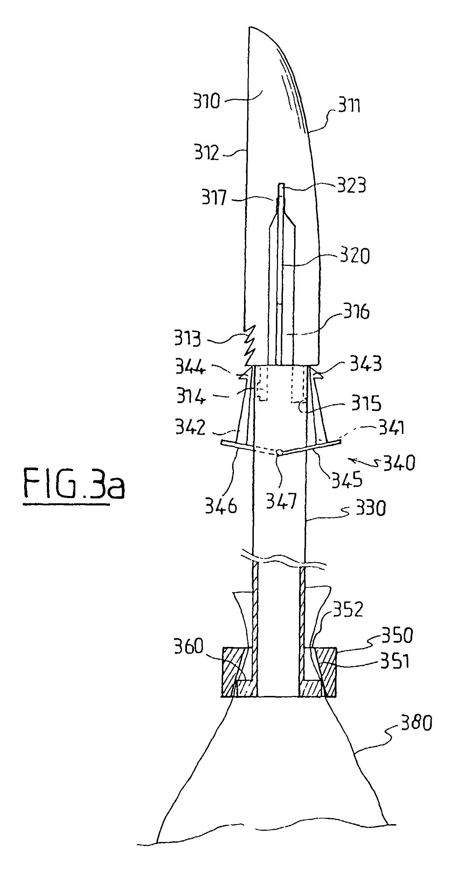

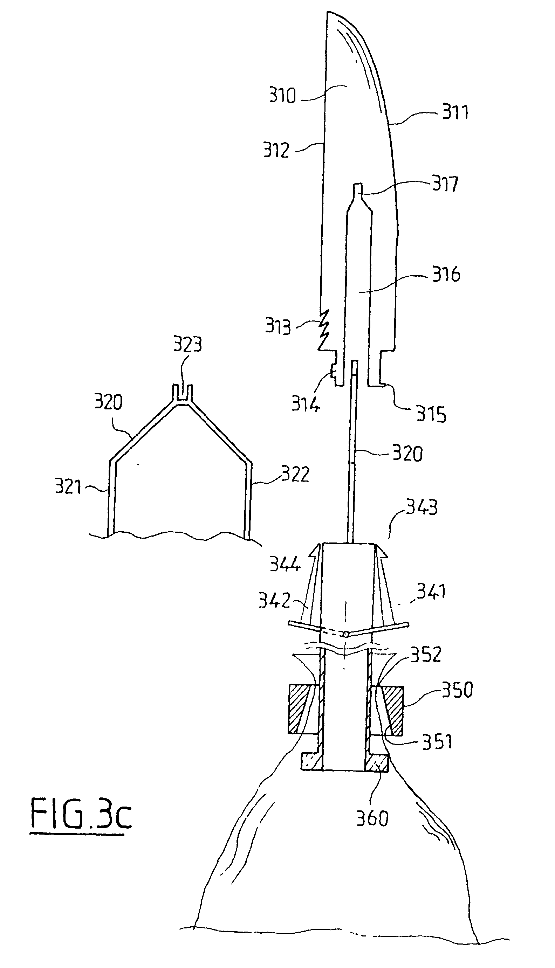

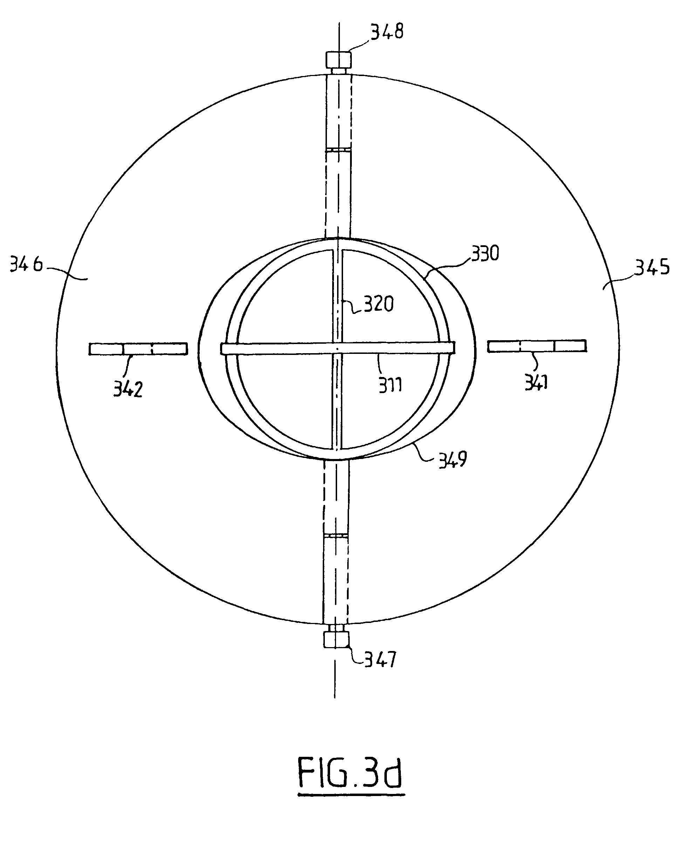

Un dispositif de prélèvement de sang selon un mode de réalisation de l'invention est illustré en Figs. 3a à 3d. Les Figs. 3a à 3c représentent des demi-coupes du dispositif dans différentes configuration. Les coupes sont réalisées dans un plan axial et limitée à la partie basse du dispositif, jusqu'au double trait symbolisant la coupure. La partie haute du dispositif est représentée en vue frontale. La Fig. 3d représente une vue de dessus du dispositif.

Le dispositif de prélèvement comprend une lame 310 amovible à simple tranchant 311, la lame étant pourvue de dents 313 à sa partie inférieure du côté de son arête non tranchante 312. Ces dents ont pour fonction d'empêcher la sortie intempestive de la lame du corps de l'animal. Le fait que la lame ne possède qu'un seul tranchant permet de l'enfoncer dans le corps de l'animal sans lui entamer le sternum.

A sa base, la lame comporte un guide 314 destiné à glisser dans une rainure de guidage ainsi qu'un ergot de blocage 315. La lame est évidée dans sa partie centrale 316, le long de son axe longitudinal, de manière à permettre à l'étrier 320 de s'y engager jusqu'à l'encoche 317. La Fig. 3c montre sur sa partie gauche une vue de droite de l'étrier. L'étrier 320 est soudé par ses deux bras 321 et 322 au manche tubulaire 330. La partie supérieure de l'étrier possède une forme en U dont les branches sont dirigées dans l'axe de la lame et viennent la recouvrir de part et d'autre dans le prolongement de l'encoche 317. Le manche creux est pourvu d'une rainure parallèle à l'axe du tube, aménagée dans la paroi intérieure 335 de celui-ci et débouchant à son extrémité supérieure. Cette rainure permet de recevoir le guide 314 et d'assurer la rigidité latérale de la liaison manche-lame. Du côté opposé à la rainure est prévu un trou traversant dans la paroi 335, dans lequel peut venir se loger l'ergot 315. Lorsque l'ergot 315 est engagé dans le trou 332, la lame est immobilisée dans le sens axial. La lame peut être facilement retirée du manche en appuyant sur l'extrémité de l'ergot 315, qui se dégage alors du trou 332, grâce à la flexibilité de la zone rétrécie 318.

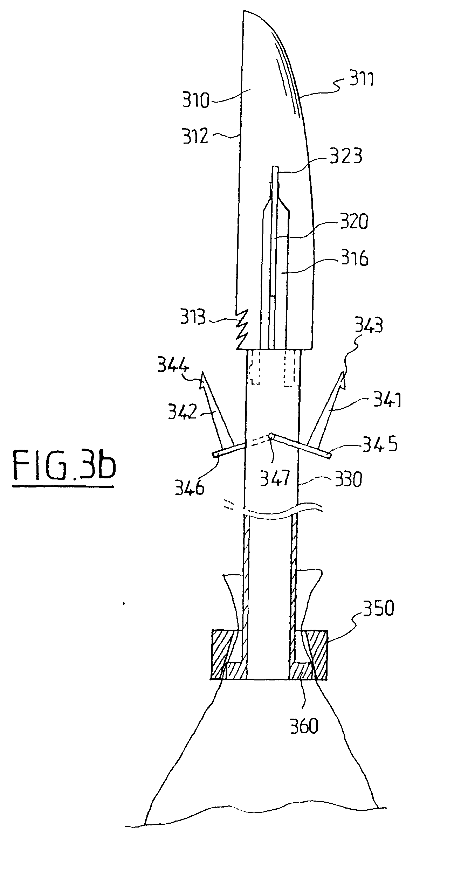

Le dispositif comporte en outre deux bras 341 et 342, armés à leurs extrémités supérieures de griffes 343 et 344 tournées vers l'extérieur du manche. Les bras 341 et 342 sont fixés ou soudés sur des bases 345 et 346 articulées autour des pivots 347 et 348 fixés ou soudés de part et d'autre du tube, à sa paroi extérieure, de manière à ne pas gêner l'écoulement du sang. Les bases 345 et 346 ont une forme complémentaire et s'articulent comme des charnières autour des pivots 347 et 348. Les bases 345 et 346 forment une garde dans la position d'enfoncement représentée en Figs. 3a et 3d. Au repos les bras 341 et 342 sont la position, dite écartée, représentée en Fig. 3b. Les griffes 343 et 344 sont alors écartées au maximum et les bases viennent en butée sur le manche. Pour prélever le sang de l'animal, le sacrificateur appuie tout d'abord sur les bases 345 et 346 constituant la garde, ce qui a pour effet de les amener les griffes 343 et 344 en position d'enfoncement (position repliée). Dans cette position, les bords intérieurs 349 des bases, de forme ellipsoidale, viennent en butée sur la paroi extérieure du tube et épousent son contour. Le sacrificateur peut alors plonger sans difficulté le trocart dans la chair de l'animal. Lorsqu'il cesse d'appuyer sur la garde les griffes ont tendance à s'écarter et à maintenir le trocart dans le corps de l'animal. Lorsque le prélèvement est terminé, le sacrificateur appuie à nouveau sur la garde, ce qui a pour effet de ramener les griffes 343 et 344 en position repliée. Il peut alors retirer le trocart sans difficulté.

Selon une autre variante de réalisation, la garde est fixe et dépourvue de bras, comme, par exemple, celle illustrée par 140 en Fig. 1. Dans ce cas, le manche 130 est pourvu à sa partie supérieure de dents (par exemple de forme similaire à 313), ou de griffes (par exemple de forme similaire à 343 ou 344) ou encore d'ergots dirigés vers le bas, de manière à éviter que le trocart se dégage facilement du corps de l'animal.

La lame, le manche tubulaire, l'étrier et la garde sont de préférence réalisés en acier inox électro-poli de manière à faciliter leur nettoyage.

Le dispositif selon l'invention possède un système de fixation rapide comportant une bague 350 pouvant librement coulisser le long du manche tubulaire. Cette bague présente une surface intérieure 351 de forme tronconique s'évasant vers le bas. Le diamètre du trou 352 à la surface supérieure de la bague est suffisamment grand pour permettre de laisser passer sans difficulté le bord supérieur d'une poche 380 entre le manche et la bague. Le système de fixation rapide comporte également une virole 360 située dans la partie inférieure du manche et montée solidairement ou soudée avec ce dernier. Avantageusement, la virole est placée à la base du manche. Le diamètre extérieur de la virole est compris entre le diamètre du trou supérieur et le diamètre du trou inférieur de la bague mobile, de sorte que cette dernière puisse venir s'engager sur la virole sans s'échapper par le bas du manche. Les Figs. 3a et 3b représentent la bague dans sa position basse où elle vient coincer le bord supérieur de la poche 380 Pour fixer la poche au manche, le bord supérieur de celle-ci est engagé entre la bague et le manche, puis la bague est abaissée jusqu'à ce que la paroi de la poche soit coincée entre la bague et le bord supérieur de la virole. Réciproquement, pour libérer la poche, il suffit de soulever la bague. La Fig. 3c représente la bague en position haute. La virole a, comme représenté, une forme annulaire, possédant un angle droit entre sa paroi latérale et sa paroi supérieure ou une forme différente, notamment une forme semi-torique. Elle peut être soudée ou vissée sur le manche ou bien encore le manche peut avoir été usiné pour présenter cette forme. Lorsque la forme semi-torique est choisie, celle-ci peut être réalisée par un joint torique en caoutchouc engagé dans une gorge circulaire prévue à cet effet.

La poche 380 est avantageusement constituée d'un sac en matière plastique de qualité alimentaire et stérile, suffisamment résistant pour supporter le poids de la quantité de sang de l'animal saigné. Les poches ne sont pas réutilisées après l'opération de saignée. En revanche, la matière plastique qui les constitue peut être avantageusement recyclée.

Selon une variante de réalisation, la paroi intérieure de la poche est constituée ou est revêtue d'un agent complexant du calcium comme, par exemple, l'acide éthylènediaminetétraacétique ou bien un citrate, un oxalate ou un fluoride. Comme la réaction de coagulation du sang nécessite la présence d'ions calcium, cette variante de réalisation permet de ralentir la formation du caillot. Alternativement ou de surcroît, l'on peut injecter un agent anti-coagulant à l'intérieur de la poche avant le prélèvement. Avantageusement, le produit anti-coagulant est injecté sous forme liquide dans la poche, une fois fixée sur le manche creux, via la partie de l'orifice supérieur du manche creux 330 non obstruée par la lame 310, comme on peut le voir en Fig. 3d.

Dans d'autre types d'applications, notamment alimentaires, le sac en plastique de comporte aucun agent complexant et aucun produit anti-coagulant n'est ajouté. Le caillot se forme dans le sac. Le sérum peut être ensuite récupéré, avec éventuellement une étape de pressage complémentaire pour extraire le reliquat du caillot.

Enfin, il est également envisagé la production de sang battu à partir du sang prélevé. A cette fin, les poches de sang sont plongées immédiatement après la fin du prélèvement dans un bac à ultrasons, provoquant une hémolyse.

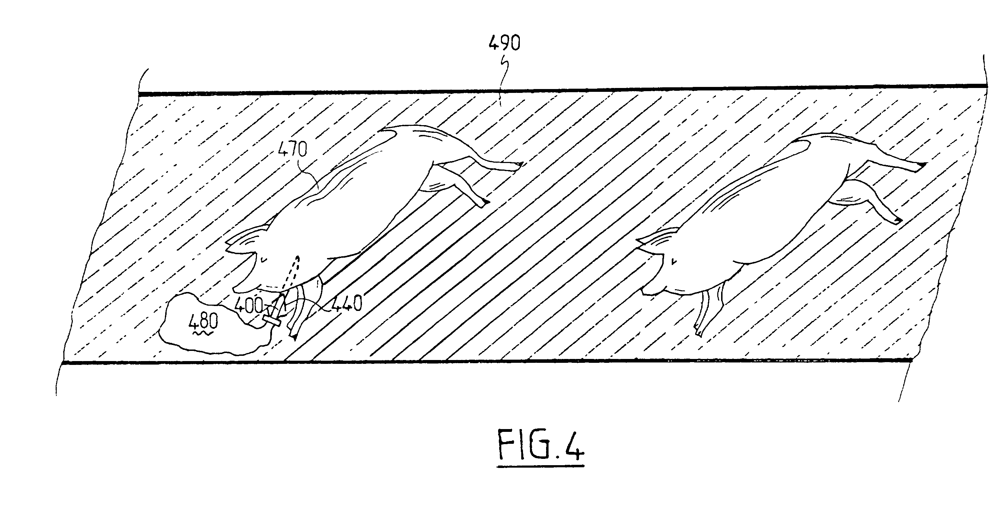

Le dispositif de prélèvement selon l'invention peut être utilisé pour saigner l'animal en position suspendue. Dans ce cas, il faut prévoir, de préférence, un système de suspension annexe du trocart car ce dernier supporte le poids du sang prélevé. Avantageusement et de manière originale, le sang sera prélevé de l'animal en position couchée, comme indiqué en Fig. 4. Pour ce faire, le corps de l'animal 470 est allongé sur un tapis d'entraînement horizontal 490 ou faiblement incliné. Après fixation de la poche 480 sur le manche et enfoncement du trocart 400, la poche est placée à proximité immédiate de l'animal sur le même tapis d'entraînement ou sur un élément d'entraînement progressant sensiblement à même vitesse que ledit tapis.

Le dispositif de prélèvement selon l'invention permet une collecte de sang dans de très bonne conditions d'hygiène puisque l'ensemble trocart-poche isole le sang du milieu ambiant. Lorsque le prélèvement est terminé, la poche de collecte est fermée ce qui minimise les risques de contamination ultérieurs. Les poches ne nécessite de nettoyage car elles ne sont pas réutilisées. La matière plastique constitutive des poches est recyclée.

Le dispositif de prélèvement selon l'invention permet de collecter le sang de manière individuelle, animal par animal. Chaque poche comprend un moyen d'identification, par exemple un code barres ou un transpondeur. Chaque animal abattu port également un moyen d'identification, par exemple par encrage indélébile ou par adjonction d'un transpondeur. De cette manière on peut associer de manière univoque une poche à un animal. Cette correspondance est connue du système ou bien saisie par un opérateur. A la sortie du poste de saignée, les poches de sang prélevé sont détachées des trocarts. Les poches sont alors suspendues à un convoyeur, en attendant la décision du poste de contrôle vétérinaire. Les trocarts sont, quant à eux, dirigés vers un poste de nettoyage et de stérilisation pour pouvoir être réutilisés. A chaque fois que le poste de contrôle vétérinaire conclut qu'un animal est sain, il valide le code d'identification de l'animal. Les poches de sang suspendues au convoyeur d'attente, passent une à une devant un dispositif de lecture après un temps de retard déterminé, supérieur au temps de transit dans la chaîne d'abattage. Si le code d'identification de la poche lu par le dispositif de lecture correspond au code d'un animal ayant été identifié comme sain, la poche est automatiquement aiguillée vers un poste de vidange et/ou de traitement. Plusieurs postes différents correspondant à différents traitements peuvent être prévus, l'aiguillage des poches étant assurée automatiquement à partir de leurs codes d'identification. Si lors du passage devant le dispositif de lecture, le code de l'animal associé n'est pas validé, la poche est automatiquement dirigée vers une voie de garage. Une telle poche peut correspondre à un animal déclaré impropre à la consommation ou encore à un animal tombé de la chaîne d'abattage. Les poches sur la voie de garage subissent un traitement particulier. Elles peuvent être éventuellement renvoyées dans le circuit normal si l'animal a été ultérieurement retrouvé et déclaré sain ou bien rejoindre la carcasse de l'animal saisi pour destruction par les services compétents. Le procédé de prélèvement selon l'invention permet donc de garantir une perte minimale, des coûts de destruction et une pollution de l'environnement particulièrement réduits.

## Revendications

1. Dispositif pour prélever le sang d'un animal de boucherie, notamment d'un porc, comprenant un manche tubulaire (330) à une première extrémité duquel est fixée une lame (310), le dispositif comprenant un moyen de fixation rapide (350, 360) adapté à fixer audit manche une poche (380) destinée à recueillir le sang de l'animal, **caracterisé en ce que** ledit moyen de fixation comporte un moyen de blocage (360) ainsi qu'une bague (350) pouvant librement coulisser sur ce dernier, la bague présentant une paroi intérieure (351) de forme tronconique, et **en ce que** le moyen de blocage est formé par une virole (360) de forme annulaire possédant un angle droit entre sa paroi latérale et sa paroi supérieure, la paroi intérieure (351) pouvant venir s'appuyer sur l'arête supérieure de ladite virole de manière à pouvoir coincer le bord supérieur de la poche (380) entre la bague (350) et le bord supérieur de la virole.

2. Dispositif selon la revendication 1, **caractérisé en ce que** la virole fait partie intégrale du manche.

3. Dispositif selon l'une des revendications précédentes, **caractérisé en ce qu'**il comprend une poche constituée d'un sac de collecte de sang (380), en matière plastique, de capacité suffisante pour recueillir la quantité de sang d'un animal, ledit sac présentant à sa partie supérieure un orifice de taille suffisante pour laisser passer la seconde extrémité du manche et pouvant être fixé à ce dernier au moyen dudit moyen de fixation (350, 360).

4. Dispositif selon les revendications 3 et 1 ou 3 et 2, **caractérisé en ce que** le bord supérieur du sac est coincé entre la paroi intérieure de la bague et ladite virole.

5. Dispositif selon l'une des revendications 3 ou 4, **caractérisé en ce que** ledit sac comprend des moyens d'identification.

6. Dispositif selon l'une des revendication 3 à 5, **caractérisé en ce que** le matériau constitutif de la paroi intérieure du sac contient ou est revêtue d'un agent complexant du calcium.

7. Dispositif selon l'une des revendications précédentes **caractérisée en ce que** le manche tubulaire est doté d'une garde (340) formée de deux bases articulées (345, 346) sur lesquelles sont fixées deux griffes (343, 344), la garde pouvant prendre une première position dans laquelle les griffes sont rapprochées et une seconde position dans laquelle les griffes sont écartées du manche.

8. Dispositif selon l'une des revendications 1 à 6, **caractérisé en ce que** le manche tubulaire est doté de dents à sa partie supérieure, lesdites dents étant dirigés vers le bas du manche.

9. Dispositif selon l'une des revendications précédentes, **caractérisé en ce que** le manche ainsi que la lame sont réalisés en acier inox électro-poli.

10. Dispositif selon l'une des revendications précédentes, **caractérisé en ce que** la lame est fixée audit manche au moyen d'un étrier dont les bras sont fixés à la partie supérieure du manche.

11. Dispositif selon l'une des revendications précédentes, **caractérisé en ce que** la lame ne comporte qu'un seul tranchant.

12. Procédé de prélèvement du sang d'un animal de boucherie, notamment d'un porc, **caractérisé en ce que** l'on utilise un dispositif de prélèvement selon l'une des revendications précédentes et **en ce que** l'animal est couché sur un tapis d'entraînement pendant la saignée.

13. Procédé de prélèvement selon la revendication 12, **caractérisé en ce qu'**une poche de collecte de sang étant fixée au manche du dispositif de prélèvement par ledit moyen de fixation, ladite poche est également placée sur ledit tapis d'entraînement ou sur un élément d'entraînement progressant substantiellement à la même vitesse que ledit tapis.

14. Procédé de prélèvement du sang d'un animal de boucherie, notamment d'un porc, **caractérisé en ce que** l'on utilise un dispositif de prélèvement selon l'une des revendications 1 à 11 et **en ce qu'**une poche de collecte de sang ayant été préalablement fixée au manche dudit dispositif par ledit moyen de fixation, on injecte via l'orifice supérieur du manche un agent anti-coagulant à l'intérieur de ladite poche.

## Patentansprüche

1. Vorrichtung zur Abnahme des Blutes eines Schlachttiers, insbesondere eines Schweins, umfassend einen rohrförmigen Haltegriff (330), an dessen erstem Ende ein Messer (310) befestigt ist, wobei die Vorrichtung ein Mittel zur schnellen Befestigung (350, 360) eines Beutels (380) an dem Griff zur Aufnahme des Tierblutes besitzt, **dadurch gekennzeichnet, dass** das Befestigungsmittel ein Blockiermittel (360) sowie einen Ring (350) umfasst, der frei auf dem letzteren gleiten kann, wobei der Ring eine konisch geformte Innenwand (351) besitzt, und dass das Blockiermittel aus einer ringförmigen Zwinge (360) besteht und einen rechten Winkel zwischen seiner Seitenwand und seiner oberen Wand bildet, wobei die Innenwand (351) auf der oberen Kante der Zwinge zur Anlage gebracht werden kann, so dass der obere Rand des Beutels (380) zwischen dem Ring (350) und dem oberen Rand der Zwinge eingeklemmt werden kann.

2. Vorrichtung nach Anspruch 1, **dadurch gekennzeichnet, dass** die Zwinge und der Haltegriff einstückig ausgebildet sind.

3. Vorrichtung nach einem der vorhergehenden Ansprüche, **dadurch gekennzeichnet, dass** sie einen Beutel umfasst, der aus einem Blutsammelbeutel (380) aus Kunststoff mit ausreichender Aufnahmefähigkeit zum Sammeln der Blutmenge eines Tieres besteht, wobei der Beutel an seinem oberen Teil eine Öffnung ausreichender Größe zum Durchlass des zweiten Endes des Haltegriffs besitzt, und an diesem mittels des Befestigungsmittels (350, 360) angebracht werden kann.

4. Vorrichtung nach Anspruch 3 und 1 oder 3 und 2, **dadurch gekennzeichnet, dass** der obere Rand des Beutels zwischen der Innenwand des Ringes und der Zwinge eingeklemmt ist.

5. Vorrichtung nach einem der Ansprüche 3 oder 4, **dadurch gekennzeichnet, dass** der Beutel Identifikationsmittel besitzt.

6. Vorrichtung nach einem der Ansprüche 3 bis 5, **dadurch gekennzeichnet, dass** das Material der Innenwand des Beutels ein Mittel aus einer Kalziumverbindung besitzt oder damit ausgekleidet ist.

7. Vorrichtung nach einem der vorhergehenden Ansprüche, **dadurch gekennzeichnet, dass** der rohrförmige Haltegriff mit einem Wächter (340) mit zwei angelenkten Basisteilen (345) versehen ist, auf denen zwei Klauen (343, 344) befestigt sind, wobei der Abstreifmeißel eine erste Position einnehmen kann, bei der die Klauen an den Haltegriff angenähert sind, und eine zweite Position, bei der die Klauen von dem Haltegriff abgespreizt sind.

8. Vorrichtung nach einem der Ansprüche 1 bis 6, **dadurch gekennzeichnet, dass** der rohrförmige Haltegriff an seinem oberen Teil mit Zähnen versehen ist, wobei die Zähne zum unteren Teil des Haltegriffs gerichtet sind.

9. Vorrichtung nach einem der vorhergehenden Ansprüche, **dadurch gekennzeichnet, dass** der Haltegriff sowie das Messer aus elektropoliertem Inox-Stahl hergestellt sind.

10. Vorrichtung nach einem der vorhergehenden Ansprüche, **dadurch gekennzeichnet, dass** das Messer an dem Haltegriff mittels eines Bügels befestigt ist, dessen Arme am oberen Teil des Griffs angebracht sind.

11. Vorrichtung nach einem der vorhergehenden Ansprüche, **dadurch gekennzeichnet, dass** das Messer nur eine einzige Schneidkante besitzt.

12. Verfahren zur Abnahme des Blutes von einem Schlachttier, insbesondere einem Schwein, **dadurch gekennzeichnet, dass** eine Blutabnahmevonichtung nach einem der vorhergehenden Ansprüche verwendet wird, und dass das Tier während des Ausblutens auf eine Transportmatte abgelegt wird.

13. Verfahren zur Abnahme nach Anspruch 12, **dadurch gekennzeichnet, dass** ein Blutsammelbeutel an dem Haltegriff der Abnahmevorrichtung mittels des Befestigungsmittels angebracht wird, wobei der Beutel ebenfalls auf die Transportmatte oder auf ein Förderelement platziert wird, welches sich im wesentlichen mit gleicher Geschwindigkeit wie die Matte fortbewegt.

14. Verfahren zur Abnahme des Blutes eines Schlachttiers, insbesondere eines Schweins, **dadurch gekennzeichnet, dass** eine Abnahmevorrichtung nach einem der Ansprüche 1 bis 11 verwendet wird, und dass, nachdem zuvor am Haltegriff der Vorrichtung mittels des Befestigungsmittels ein Blutsammelbeutel angebracht wurde, ein koagulationshemmendes Mittel durch die obere Öffnung des Handgriffs in den Beutel injiziert wird.

## Claims

1. A device for drawing the blood from a slaughter animal, in particular a pig, comprising a tubular sleeve (330) at a first end of which a blade (310) is fixed, the device comprising a rapid fastening means (350, 360) suitable for fastening to the said sleeve a pouch (380) intended for collecting the blood of the animal, **characterised in that** the said fastening means comprises a clamping means (360) and a ring (350) freely slideable on the latter, the ring having a truncated internal wall (351), and **in that** the clamping means is formed by an annular collar (360) having a right angle between its side wall and its upper wall, the internal wall (351) being capable of coming to rest against the upper stop of the said collar in such a way as to be able to wedge the upper edge of the pouch (380) between the ring (350) and the upper edge of the collar.

2. A device according to Claim 1, **characterised in that** the collar is an integral part of the sleeve.

3. A device according to any one of the preceding claims, **characterised in that** it comprises a pouch consisting of a blood-collecting bag (380) made of a plastics material, of sufficient capacity for collecting the quantity of blood from an animal, the said bag having, in its upper part, an opening of sufficient size to permit passage of the second end of the sleeve and being fastenable to the latter by means of the said fastening means (350, 360).

4. A device according to Claims 3 and 1 or 3 and 2, **characterised in that** the upper margin of the bag is wedged between the internal wall of the ring and the said collar.

5. A device according to any one of Claims 3 or 4, **characterised in that** the said bag comprises identification means.

6. A device according to any one of Claims 3 to 5, **characterised in that** the material constituting the internal wall of the bag contains or is coated with a calcium-complexing agent.

7. A device according to any one of the preceding claims, **characterised in that** the tubular sleeve is equipped with a guard (340) formed from two articulated bases (345, 346) on which are fixed two claws (343, 344), the guard being capable of adopting a first position in which the claws are brought close to the sleeve and a second position in which the claws are distanced therefrom.

8. A device according to any one of Claims 1 to 6, **characterised in that** the tubular sleeve is equipped with teeth in its upper part, the said teeth being directed towards the bottom of the sleeve.

9. A device according to any one of the preceding claims, **characterised in that** the sleeve and the blade are made of electropolished stainless steel.

10. A device according to any one of the preceding claims, **characterised in that** the blade is fixed to the said sleeve by means of a clamp the arms of which are fastened to the upper part of the sleeve.

11. A device according to any one of the preceding claims, **characterised in that** the blade comprises only one cutting edge.

12. A method of drawing the blood from a slaughter animal, in particular a pig, **characterised in that** a drawing device according to any one of the preceding claims is used and **in that** the animal is lying on a conveyor belt during the bleeding.

13. A drawing method according to Claim 12, **characterised in that**, a blood-collecting pouch being fastened to the sleeve of the drawing device by the said fastening means, the said pouch is similarly placed on the conveyor belt or on a drive member advancing substantially at the same speed as the said belt.

14. A method of drawing the blood from a slaughter animal, in particular a pig, **characterised in that** a drawing device according to any one of Claims 1 to 11 is used and **in that**, a blood-collecting pouch having previously been fastened to the sleeve of the said device by the said fastening means, an anti-coagulating agent is injected into the inside of the said pouch via the upper opening of the sleeve.
